# EUROPEAN PATENT SPECIFICATION

(11) **EP 1 921 359 B1**
(45) Date of publication and mention of the grant of the patent: **11.02.2009**
(21) Application number: 06425771.0
(22) Date of filing: 13.11.2006
(51) Int. Cl.: F16K 27/04, F16K 31/06

(54) **Solenoid valve provided with filter for a hydraulic actuator of a power assisted gearbox**
Magnetventil mit Filter für Hubhydraulik eines Servogetriebes
Vanne à solénoïde fournie avec un filtre pour actionneur hydraulique d'une boîte de vitesses assistée

(43) Date of publication of application: 14.05.2008
(73) Proprietor: MAGNETI MARELLI POWERTRAIN S.p.A., 20011 Corbetta (MI) (IT)
(72) Inventor: Bovina, Luca, 40033 Casalecchio di Reno (IT); Giaquinto, Antonio, 40138 Bologna (IT); Giorgini, Stefano, 40061 Minerbio (IT)
(74) Representative: Jorio, Paolo

(56) References cited:
- US-A- 4 671 488
- US-A- 5 145 146
- US-A1- 2003 226 593
- US-A1- 2004 055 551
- US-A1- 2004 182 450

## Description

### TECHNICAL FIELD

The present invention relates to a solenoid valve for a hydraulic actuator of a power assisted gearbox.

### BACKGROUND ART

Power assisted gearboxes, which are structurally similar to manual gearboxes of the traditional type, except for the fact that the clutch pedal and the gear selection lever operated by the driver are replaced by corresponding electrical or hydraulic servo-controls, are increasingly widespread. Using a power assisted manual gearbox, the driver only needs to send the order to change to a higher gear or to a lower gear to a transmission control unit and the transmission control unit autonomously changes gear by operating both on the engine and on the servo-controls associated to clutch and gearbox.

Generally, the gearbox servo-control is of the hydraulic type and operates on a drive shaft of the gearbox to impress both an axial displacement, i.e. along a central axis, to the drive shaft itself to select the gear range, and a rotation about the central axis to engage and disengage each gear. Consequently, the gearbox servo-control comprises a first hydraulic actuator mechanically coupled to the drive shaft to axially displace the drive shaft and a second hydraulic actuator mechanically coupled to the drive shaft to turn the drive shaft.

The hydraulic actuators of a power assisted gearbox are driven by respective three-way solenoid valves, each of which is in communication with a chamber of a respective hydraulic actuator, with a tank of fluid (typically oil) at atmospheric pressure, and with a pressurised fluid accumulator. The fluid may display entrained impurities which are either introduced into the hydraulic circuit along with the fluid itself or which are detached from the internal walls of the hydraulic circuit itself. Such impurities may be particularly dangerous for the solenoid valves, because they may get jammed in the mobile parts of the solenoid valves themselves, causing the locking thereof or, in any case, irregular operation.

In order to avoid the entrance of possible impurities within the hydraulic circuits of the solenoid valves, the assembly of filters at the hydraulic actuator chamber connection opening and at the hydraulic accumulator connection opening (i.e. at the connection openings which allow an entrance of fluid within the solenoid valve) has been suggested.

In the currently marketed solenoid valves, the filters comprise a ring-shaped plastic frame which supports a mesh; the plastic frame displays a pair of end rings reciprocally connected by a number of stiffening cross-pieces and is maintained in a closed position by means of a clampig fastening system. A filter of this type is fitted about a connection opening of a solenoid valve by means of a tool with initially widens the filter increasing its diameter and subsequently tightens it about the solenoid value obtaining the locking of the clamping fastening system.

However, the known filters of the type described above display a relatively small active filtering surface due to the presence of the stiffening cross-pieces; consequently, in use, the filter causes rather high localised load loss. Furthermore, the assembly of a known filter of the type described above is rather long and complex due to the difficulty of correctly locking the clamping fastening system without, at the same time, applying an excessive force on the filter which would determine the breakage of the clamping fastening system itself.

JS2004282450A1 discloses a fluid control valve including a valve body, an annular groove portion formed in an outer periphery of the valve body and a filter provided in the groove portion. The filter includes a plate with a plural of perforations and formed into a cylindrical shape and the filter further includes a snap ring formed from a thin bar bent into a loop; both ends of the snap ring extending in an axial direction and freely contacting with opposed side surfaces defining the groove portion.

### DISCLOSURE OF INVENTION

It is the object of the present invention to provide a solenoid valve for a hydraulic actuator of a power assisted gearbox, which solenoid valve is free from the drawbacks above described and, specifically, is easy and cost-effective to manufacture.

According to the present invention a solenoid valve for a hydraulic actuator of a power assisted gearbox according to what is claimed in the accompanying claims is provided.

### BRIEF DESCRIPTION OF THE DRAWINGS

The present invention will now be described with reference to the accompanying drawings which illustrate a non-limitative example of embodiment thereof, in which:
- figure 1 is a front view of a solenoid valve made according to the present invention;
- figure 2 is a plan view of a metal foil used to form a filter which is fitted onto the solenoid valve in figure 1;
- figure 3 is a perspective view of a filter which is fitted onto the solenoid valve in figure 1;
- figure 4 is a perspective view of the filter in figure 3; and
- figures 5-8 are four front views of the solenoid valve in figure 1 showing the assembly steps of the filter in figure 2.

### PREFERRED EMBODIMENTS OF THE INVENTION

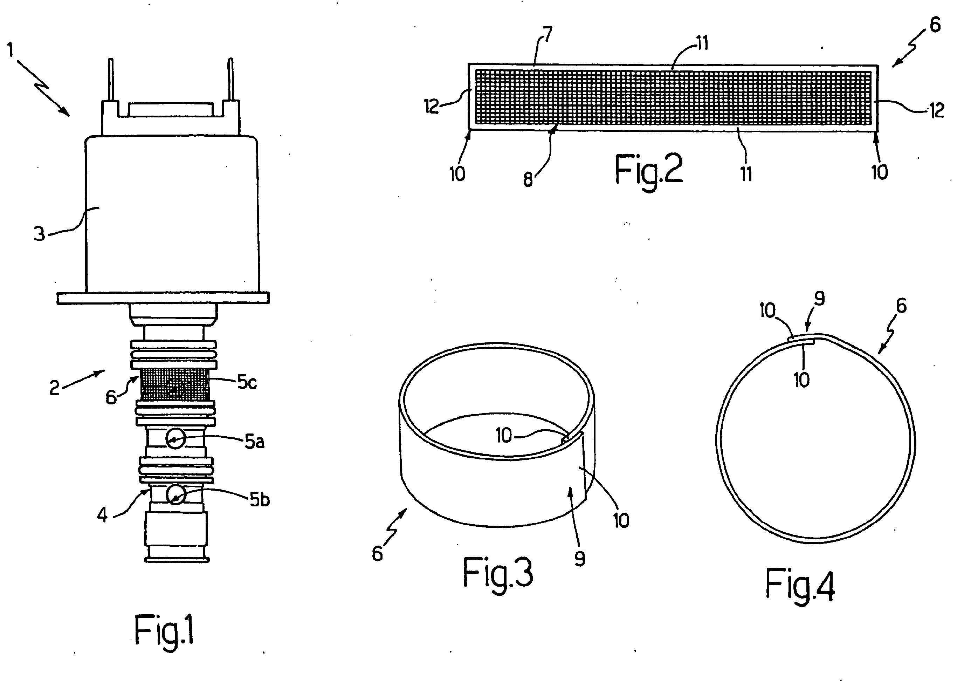

In figure 1, numeral 1 indicates as a whole a three-way solenoid valve for a hydraulic actuator of a power assisted gearbox. Solenoid valve 1 comprises a cylindrical valve body 2, within which are accommodated the mobile parts (not shown in detail) of solenoid valve 1 which are shifted by the action of an electrical actuator 3 arranged above valve body 2. Three hydraulic connection openings 5, which reciprocally overlap, are obtained through a side surface 4 of valve body 2.

When solenoid valve 1 is inserted in the hydraulic circuit, one hydraulic connection opening 5a is connected to a chamber of a corresponding hydraulic actuator (not shown), one hydraulic connection opening 5b is connected to a tank (not shown) of fluid (typically oil) at atmospheric pressure, and one hydraulic connection opening 5c is connected to a pressurised fluid accumulator (not shown).

According to the embodiment shown in figure 1, solenoid valve 1 comprises a filter 6 fitted about valve body 2 at hydraulic connection opening 5c. According to a different embodiment (not shown), solenoid valve 1 comprises two reciprocally identical filters 6 fitted about valve body 2 at hydraulic connection opening 5c and at hydraulic connection opening 5a.

As shown in figures 2-4, filter 6 consists of a metal band 7, which displays a perforated central portion 8 and is folded as a ring so as to obtain an overlapping zone 9 between its two opposite ends 10. Overlapping zone 9 of the two opposite ends 10 displays a total length from 3% to 7% of the total length of metal band 7; specifically, overlapping zone 9 is usually equal to approximately 4% of the total length of metal band 7.

The holes of perforated central portion 8 display a diameter from 0.10 to 0.45 mm. Metal band 7 is formed by steel and presents a thickness from 0.08 mm to 0.30 mm; preferably, when band 7 displays a thickness from 0.20 mm to 0.30 mm, band 7 is formed by spring steel which displays a higher elasticity with respect to normal steel.

According to a preferred construction method, metal band 7 is made from a sheet of metal by means of a photogravure process and a subsequent calendering operation which confers the annular shape to metal band 7 itself.

At overlapping zone 9 the two opposite ends 10 of metal band 7 may either not be reciprocally connected or be reciprocally connected by welding which is performed after fitting filter 6 about valve body 2.

According to a preferred embodiment, metal band 7 displayed two longitudinal reinforcement edges 11 without holes and two transversal reinforcement edges 12 without holes. Longitudinal reinforcement edges 11 may either not be connected to valve body 2 or be connected to valve body 2 by welding which is performed after fitting filter 6 about valve body 2.

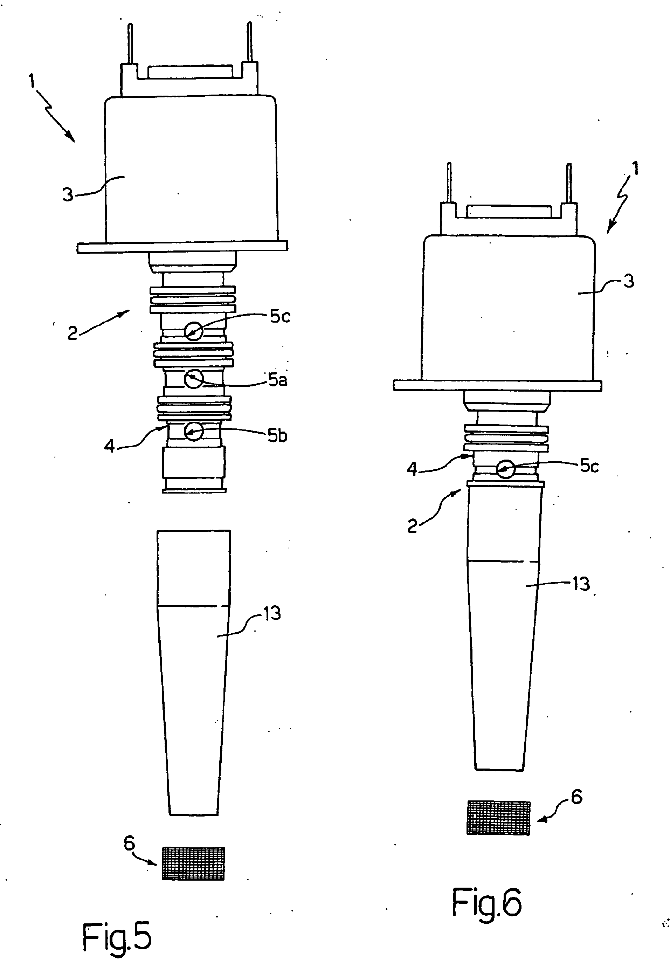

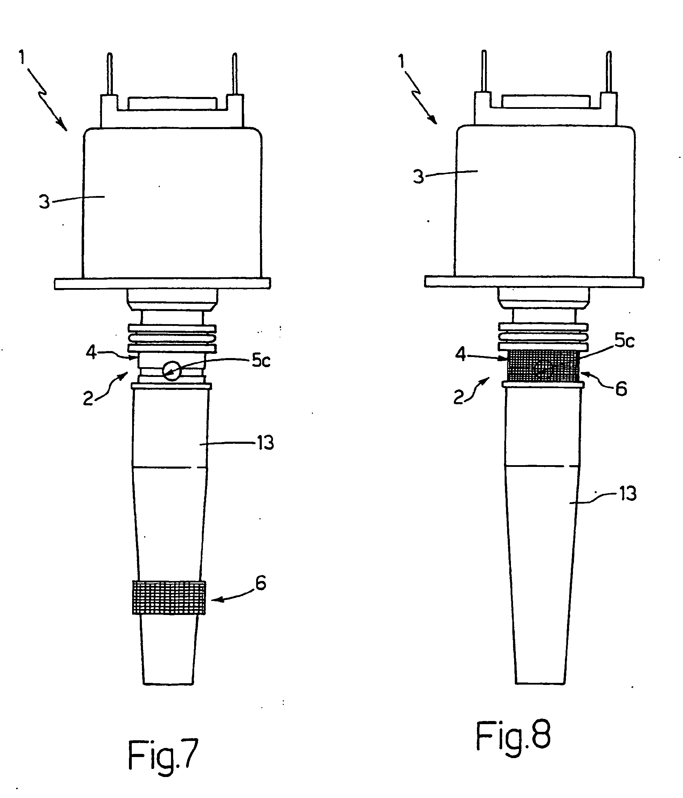

As shown in figures 5-8, the use of a truncated-cone-shaped hollow tool 13 (i.e. with a progressively increasing section) is contemplated in order to fit filter 6 about valve body 2. Initially, valve body 2 is inserted within tool 13 so that tool 13 itself is arranged about valve body 2 of solenoid valve 1 and ends at connection opening 5c about which filter 6 is arranged; subsequently, metal band 7 is inserted about tool 13 and is pushed along tool 13 itself until it reaches connection opening 5c so as to determine a progressive widening of metal band 7 itself along tool 13. The described method may further comprise the step of welding together the two ends 10 of metal band 7 after having fitted filter 6 about valve body 2. Furthermore, the described method may also comprise the further step of welding the two longitudinal reinforcement edges 11 to valve body 2 after having fitted filter 6 about valve body 2 itself.

Solenoid valve 1 described above displays a number of advantages, because it is simple and cost-effective to make and at the same time is provided with one or more filters at its hydraulic connection openings 5, which filters 6 display a low resistance to the passage of fluid and a high assembly simplicity.

## Claims

1. A solenoid valve (1) for a hydraulic actuator of a power assisted gearbox; the solenoid valve (1) comprises:
a cylindrical valve body (2);
at least one hydraulic connection opening (5), which is obtained through a side surface (4) of the valve body (2); and
a filter (6) which is fitted about the valve body (2) at the hydraulic connection opening (5) and consists of a metal band (7), which displays a perforated central portion (8) and is folded as a ring so as to obtain an overlapping zone (9) between its two opposite ends (10);
the solenoid valve (1) is **characterised in that** the metal band (7) of the filter (6) is made from a sheet of metal by means of a photogravure process and a subsequent calendering operation.

2. A solenoid valve (1) according to claim 1, wherein the overlapping zone (9) of the two opposite ends (10) displays a length from 3% to 7% of the total length of the metal band (7).

3. A solenoid valve (1) according to claim 2, wherein the overlapping zone (9) of the two opposite ends (10) displays a length of approximately 4% of the total length of the metal band (7).

4. A solenoid valve (1) according to claim 1, 2 or 3, wherein at overlapping zone (9) the two opposite ends (10) of the metal band (7) are not reciprocally connected.

5. A solenoid valve (1) according to claim 1, 2 or 3, wherein at overlapping zone (9) the two opposite ends (10) of the metal band (7) are reciprocally connected by welding which is performed after fitting the filter (6) about the valve body (2).

6. A solenoid valve (1) according to one of the claims from 1 to 5, wherein the metal band (7) displays two longitudinal reinforcement edges (11) without holes.

7. A solenoid valve (1) according to claim 6, wherein the two longitudinal reinforcement edges (11) are not connected to the valve body (2).

8. A solenoid valve (1) according to claim 6, wherein the two longitudinal reinforcement edges (11) are connected to the valve body (2) by welding which is performed after having fitted the filter (6) about the valve body (2).

9. A solenoid valve (1) according to one of the claims from 1 to 8, wherein the metal band (7) displays two transversal reinforcement edges (12) without holes.

10. A solenoid valve (1) according to one of the claims from 1 to 9, wherein the holes of the central perforated portion (8) display a diameter from 0.10 to 0.45 mm.

11. A solenoid valve (1) according to one of the claims from 1 to 10, wherein the metal band (7) is formed by steel and displays a thickness from 0.08 mm to 0.30 mm.

12. A solenoid valve (1) according to claim 11, wherein the metal band (7) is formed by spring steel and displays a thickness from 0.20 mm to 0.30 mm.

13. A filter (6) adaptable to be fitted about a cylindrical valve body (2) of a solenoid valve (1) for a hydraulic actuator of a power assisted gearbox;
the filter (6) consists of a metal band (7), which displays a perforated central portion (8) and is folded as a ring so as to obtain an overlapping zone (9) between its two opposite ends (10);
the filter (6) is **characterised in that** the metal band (7) of the filter (6) is made from a sheet of metal by means of a photogravure process and a subsequent calendering operation.

14. A filter (6) according to claim 13, wherein the overlapping zone (9) of the two opposite ends (10) displays a length from 3% to 7% of the total length of the metal band (7).

15. A filter (6) according to claim 14, wherein the overlapping zone (9) of the two opposite ends (10) displays a length of approximately 4% of the total length of the metal band (7).

16. A filter (6) according to claim 13, 14 or 15, wherein at overlapping zone (9) the two opposite ends (10) of the metal band (7) are not reciprocally connected.

17. A filter (14) according to claim 13, 14 or 15, wherein at overlapping zone (9) the two opposite ends (10) of the metal band (7) are reciprocally connected by welding which is performed after fitting the filter (6) about the valve body (2).

18. A filter (6) according to one of the claims from 13 to 17, wherein the metal band (7) displays two longitudinal reinforcement edges (11) without holes.

19. A filter (6) according to one of the claims from 13 to 18, wherein the metal band (7) displays two transversal reinforcement edges (12) without holes.

20. A filter (6) according to one of the claims from 13 to 19, wherein the holes of the central perforated portion (8) present a diameter from 0.10 to 0.16 mm.

21. A filter (6) according to one of the claims from 13 to 20, wherein the metal band (7) is formed by steel and displays a thickness from 0.08 mm to 0.30 mm.

22. A filter (6) according to claim 21, wherein the metal band (7) is formed by spring steel and displays a thickness from 0.20 mm to 0.30 mm.

23. A method for fitting a filter (6) about a cylindrical valve body (2) of a solenoid valve (1) for a hydraulic actuator of a power assisted gearbox; the filter (6) consists of a metal band (7), which displays a central perforated portion (8) and is folded as a ring so as to make an overlapping zone (9) between its two opposite ends (10);
the method comprising the steps of:
arranging about valve body (2) of the solenoid valve (1) a truncated-cone-shaped hollow tool (13) so that the tool (13) ends at a connection opening (5) of the solenoid valve (1) about which the filter is to be arranged (6);
inserting the metal band (7) about the tool; and
pushing the metal band (7) along the tool (13) until it reaches the connection opening (5) so as to determine a progressive widening of the metal band (7) itself along the tool.

24. A method according to claim 23 and comprising the further step of welding together the two opposite ends (10) of the metal band (7) after having fitted the filter (6) about the valve body (2).

25. A method according to claim 23 or 24 and comprising the further step of welding the two longitudinal reinforcement edges (11) without holes to the valve body (2) after having fitted the filter (6) about the valve body (2) itself.

## Patentansprüche

1. Magnetventil (1) für ein hydraulisches Stellglied eines Servogetriebes, wobei das Magnetventil (1) Folgendes aufweist:
einen zylinderförmigen Ventilkörper (2);
zumindest eine hydraulische Anschlussöffnung (5), welche durch eine Seitenfläche (4) des Ventilkörpers (2) erhalten wird; und
einen Filter (6), welcher um den Ventilkörper (2) herum an der hydraulischen Anschlussöffnung (5) befestigt ist und aus einem Metallband (7) besteht, welches einen perforierten Mittelabschnitt (8) aufweist und als Ring gefaltet ist, um einen Überlappungsbereich (9) zwischen den zwei gegenüberliegenden Enden (10) desselben zu erhalten;
wobei das Magnetventil (1) **dadurch gekennzeichnet ist, dass** das Metallband (7) des Filters (6) aus einem Metallblech mittels eines Heliogravüreverfahrens und einer anschließenden Kalandrieroperation hergestellt wird.

2. Magnetventil (1) nach Anspruch 1, wobei der Überlappungsbereich (9) der zwei gegenüberliegenden Enden (10) eine Länge von 3% bis 7% der Gesamtlänge des Metallbandes (7) aufweist.

3. Magnetventil (1) nach Anspruch 2, wobei der Überlappungsbereich (9) der zwei gegenüberliegenden Enden (10) eine Länge von ungefähr 4% der Gesamtlänge des Metallbandes (7) aufweist.

4. Magnetventil (1) nach Anspruch 1, 2 oder 3, wobei die zwei gegenüberliegenden Enden (10) des Metallbandes (7) am Überlappungsbereich (9) nicht wechselseitig verbunden sind.

5. Magnetventil (1) nach Anspruch 1,2 oder 3, wobei die zwei gegenüberliegenden Enden (10) des Metallbandes (7) am Überlappungsbereich durch Schweißen wechselseitig verbunden werden, welches nach dem Befestigen des Filters (6) um den Ventilkörper (2) herum durchgeführt wird.

6. Magnetventil (1) nach einem der Ansprüche 1 bis 5, wobei das Metallband (7) zwei längslaufende Verstärkungsränder (11) ohne Öffnungen aufweist.

7. Magnetventil (1) nach Anspruch 6, wobei die zwei längslaufenden Verstärkungsränder (11) mit dem Ventilkörper (2) nicht verbunden sind.

8. Magnetventil (1) nach Anspruch 6, wobei die zwei längslaufenden Verstärkungsränder (11) durch Schweißen mit dem Ventilkörper (2) verbunden sind, welches nach dem Befestigen des Filters (6) um den Ventilkörper (2) herum durchgeführt wird.

9. Magnetventil (1) nach einem der Ansprüche 1 bis 8, wobei das Metallband (7) zwei transversale Verstärkungsränder (12) ohne Öffnungen aufweist.

10. Magnetventil (1) nach einem der Ansprüche 1 bis 9, wobei die Öffnungen des perforierten Mittelabschnitts (8) einen Durchmesser von 0,10 mm bis 0,45 mm aufweisen.

11. Magnetventil (1) nach einem der Ansprüche 1 bis 10, wobei das Metallband (7) aus Stahl gebildet ist und eine Stärke von 0,08 mm bis 0,30 mm aufweist.

12. Magnetventil (1) nach Anspruch 11, wobei das Metallband (7) aus Federstahl gebildet ist und eine Stärke von 0,20 mm bis 0,30 mm aufweist.

13. Filter (6), welcher adaptierbar ist um einen zylinderförmigen Ventilkörper (2) eines Magnetventils (1) für ein hydraulisches Stellglied eines Servogetriebes herum befestigt zu werden;
wobei der Filter (6) aus einem Metallband (7) besteht, welches einen perforierten Mittelabschnitt (8) aufweist und als Ring gefaltet ist, um einen Überlappungsbereich (9) zwischen den zwei gegenüberliegenden Enden (10) desselben zu erhalten; und
der Filter (6) **dadurch gekennzeichnet ist, dass** das Metallband (7) des Filters (6) aus einem Metallblech mittels eines Heliogravüreverfahrens und einer anschließenden Kalandrieroperation hergestellt wird.

14. Filter (6) nach Anspruch 13, wobei der Überlappungsbereich (9) der zwei gegenüberliegenden Enden (10) eine Länge von 3% bis 7% der Gesamtlänge des Metallbandes (7) aufweist.

15. Filter (6) nach Anspruch 14, wobei der Überlappungsbereich (9) der zwei gegenüberliegenden Enden (10) eine Länge von ungefähr 4% der Gesamtlänge des Metallbandes (7) aufweist.

16. Filter (6) nach Anspruch 13, 14 oder 15, wobei die zwei gegenüberliegenden Enden (10) des Metallbandes (7) am Überlappungsbereich (9) nicht wechselseitig verbunden sind.

17. Filter (14) nach Anspruch 13, 14 oder 15, wobei die zwei gegenüberliegenden Enden (10) des Metallbandes (7) am Überlappungsabschnitt (9) durch Schweißen wechselseitig verbunden werden, welches nach dem Befestigen des Filters (6) um den Ventilkörper (2) herum durchgeführt wird.

18. Filter (6) nach einem der Ansprüche 13 bis 17, wobei das Metallband (7) zwei längslaufende Verstärkungsränder (11) ohne Öffnungen aufweist.

19. Filter (6) nach einem der Ansprüche 13 bis 18, wobei das Metallband (7) zwei transversale Verstärkungsränder (12) ohne Öffnungen aufweist.

20. Filter (6) nach einem der Ansprüche 13 bis 19, wobei die Öffnungen des perforierten Mittelabschnitts (8) einen Durchmesser von 0,10 mm bis 0,16 mm aufzeigen.

21. Filter (6) nach einem der Ansprüche 13 bis 20, wobei das Metallband (7) aus Stahl gebildet ist und eine Stärke von 0,08 mm bis 0,30 mm aufweist.

22. Filter (6) nach Anspruch 21, wobei das Metallband (7) aus Federstahl gebildet ist und eine Stärke von 0,20 mm bis 0,30 mm aufweist.

23. Verfahren zum Befestigen eines Filters (6) um einen zylinderförmigen Ventilkörper (2) eines Magnetventils (1) für ein hydraulisches Stellglied eines Servogetriebes herum, wobei der Filter (6) aus einem Metallband (7) besteht, welches einen perforierten Mittelabschnitt (8) aufweist und als Ring gefaltet ist, um einen Überlappungsbereich (9) zwischen den gegenüberliegenden Enden (10) desselben herzustellen;
wobei das Verfahren die Folgenden Schritte aufweist:
Anordnen eines kegelstumpfförmigen Hohlwerkzeugs (13) derart um den Ventilkörper (2) des Magnetventils (1) herum, dass das Werkzeug (14) an einer Anschlussöffnung (5) des Magnetventils (1) endet, um welche der Filter (6) anzuordnen ist;
Einsetzen des Metallbandes (7) um das Werkzeug herum; und
Drücken des Metallbandes (7) entlang des Werkzeugs (13) bis es die Anschlussöffnung (5) erreicht, um ein progressives Weiten des Metallbandes (7) selbst entlang des Werkzeugs zu bestimmen.

24. Verfahren nach Anspruch 23, welches zudem den Schritt zum Zusammenschweißen der zwei gegenüberliegenden Enden (10) des Metallbandes (7) nach dem Befestigen des Filters (6) um den Ventilkörper (2) herum aufweist.

25. Verfahren nach Anspruch 23 oder 24, welches zudem den Schritt zum Schweißen der zwei längslaufenden Verstärkungsränder (11) ohne Öffnungen an den Ventilkörper (2) nach dem Befestigen des Filters (6) um den Ventilkörper (2) selbst herum aufweist.

## Revendications

1. Électrovalve (1) pour un actionneur hydraulique d'une boîte à vitesses servo-assistée ; l'électrovalve (1) comprenant :
un corps de valve cylindrique (2) ;
au moins une ouverture de connexion hydraulique (5) qui est obtenue à travers une surface latérale (4) du corps de valve (2) ; et
un filtre (6) qui est fixé autour du corps de valve (2) au niveau de l'ouverture de connexion hydraulique (5) et qui consiste en une bande métallique (7) qui présente une partie centrale perforée (8) et qui est pliée en forme d'anneau de sorte à obtenir une zone de chevauchement (9) entre ses deux extrémités opposées (10) ;
l'électrovalve (1) est **caractérisée en ce que** la bande métallique (7) du filtre (6) est fabriquée, à partir d'une feuille de métal, par un procédé de photogravure et une opération ultérieure de calandrage.

2. Électrovalve (1) selon la revendication 1, dans laquelle la zone de chevauchement (9) des deux extrémités opposées (10) présente une longueur allant de 3 % à 7 % de la longueur totale de la bande métallique (7).

3. Électrovalve (1) selon la revendication 2, dans laquelle la zone de chevauchement (9) des deux extrémités opposées (10) présente une longueur égale à environ 4 % de la longueur totale de la bande métallique (7).

4. Électrovalve (1) selon la revendication 1, 2 ou 3, dans laquelle, au niveau de la zone de chevauchement (9), les deux extrémités opposées (10) de la bande métallique (7) ne sont pas reliées ensemble.

5. Électrovalve (1) selon la revendication 1, 2 ou 3, dans laquelle, au niveau de la zone de chevauchement (9), les deux extrémités opposées (10) de la bande métallique (7) sont reliées ensemble par une opération de soudage exécutée après avoir fixé le filtre (6) autour du corps de valve (2).

6. Électrovalve (1) selon l'une quelconque des revendications 1 à 5, dans laquelle la bande métallique (7) présente deux bords longitudinaux de renforcement (11) sans orifices.

7. Électrovalve (1) selon la revendication 6, dans laquelle les deux bords longitudinaux de renforcement (11) ne sont pas reliés au corps de valve (2).

8. Électrovalve (1) selon la revendication 6, dans laquelle les deux bords longitudinaux de renforcement (11) sont reliés au corps de valve (2) par une opération de soudage exécutée après avoir fixé le filtre (6) autour du corps de valve (2).

9. Électrovalve (1) selon l'une quelconque des revendications 1 à 8, dans laquelle la bande métallique (7) présente deux bords transversaux de renforcement (12) sans orifices.

10. Électrovalve (1) selon l'une quelconque des revendications 1 à 9, dans laquelle les orifices de la partie centrale perforée (8) présentent un diamètre de 0,10 à 0,45 mm.

11. Électrovalve (1) selon l'une quelconque des revendications 1 à 10, dans laquelle la bande métallique (7) est faite en acier et présente une épaisseur allant de 0,08 mm à 0,30 mm.

12. Électrovalve (1) selon la revendication 11, dans laquelle la bande métallique (7) est faite en acier à ressorts et présente une épaisseur allant de 0,20 mm à 0,30 mm.

13. Filtre (6) adaptable de manière à être fixé autour d'un corps de valve cylindrique (2) d'une électrovalve (1) pour un actionneur hydraulique d'une boîte à vitesses servo-assistée ;
le filtre (6) consistant en une bande métallique (7) qui présente une partie centrale perforée (8) et qui est pliée en forme d'anneau de sorte à obtenir une zone de chevauchement (9) entre ses deux extrémités opposées (10) ;
le filtre (6) est **caractérisé en ce que** la bande métallique (7) du filtre (6) est fabriquée, à partir d'une feuille de métal, par un procédé de photogravure et une opération ultérieure de calandrage.

14. Filtre (6) selon la revendication 13, dans lequel la zone de chevauchement (9) des deux extrémités opposées (10) présente une longueur allant de 3 % à 7 % de la longueur totale de la bande métallique (7).

15. Filtre (6) selon la revendication 14, dans lequel la zone de chevauchement (9) des deux extrémités opposées (10) présente une longueur égale à environ 4 % de la longueur totale de la bande métallique (7).

16. Filtre (6) selon la revendication 13, 14 ou 15, dans lequel, au niveau de la zone de chevauchement (9), les deux extrémités opposées (10) de la bande métallique (7) ne sont pas reliées ensemble.

17. Filtre (6) selon la revendication 13, 14 ou 15, dans lequel, au niveau de la zone de chevauchement (9), les deux extrémités opposées (10) de la bande métallique (7) sont reliées ensemble par une opération de soudage exécutée après avoir fixé le filtre (6) autour du corps de valve (2).

18. Filtre (6) selon l'une quelconque des revendications 13 à 17, dans lequel la bande métallique (7) présente deux bords longitudinaux de renforcement (11) sans orifices.

19. Filtre (6) selon l'une quelconque des revendications 13 à 18, dans lequel la bande métallique (7) présente deux bords transversaux de renforcement (12) sans orifices.

20. Filtre (6) selon l'une quelconque des revendications 13 à 19, dans lequel les orifices de la partie centrale perforée (8) présentent un diamètre de 0,10 à 0,16 mm.

21. Filtre (6) selon l'une quelconque des revendications 13 à 20, dans lequel la bande métallique (7) est faite en acier et présente une épaisseur allant de 0,08 mm à 0,30 mm.

22. Filtre (6) selon la revendication 21, dans lequel la bande métallique (7) est faite en acier à ressorts et présente une épaisseur allant de 0,20 mm à 0,30 mm.

23. Procédé permettant de fixer un filtre (6) autour d'un corps de valve cylindrique (2) d'une électrovalve (1) pour un actionneur hydraulique d'une boîte à vitesses servo-assistée ; le filtre (6) consistant en une bande métallique (7) qui présente une partie centrale perforée (8) et qui est pliée en forme d'anneau de sorte à obtenir une zone de chevauchement (9) entre ses deux extrémités opposées (10) ;
le procédé comprenant les étapes consistant à :
disposer, autour du corps de valve (2) de l'électrovalve (1) un outil creux de forme tronconique (13) de sorte que l'outil (13) s'arrête au niveau d'une ouverture de connexion (5) de l'électrovalve (1) autour de laquelle le filtre (6) doit être agencé ;
insérer la bande métallique (7) autour de l'outil ; et
pousser la bande métallique (7) le long de l'outil (13) jusqu'à ce qu'elle atteigne l'ouverture de connexion (5) de sorte à déterminer un élargissement progressif de la bande métallique (7) elle-même le long de l'outil.

24. Procédé selon la revendication 23, comprenant en outre l'étape supplémentaire consistant à souder ensemble les deux extrémités opposées (10) de la bande métallique (7) après avoir fixé le filtre (6) autour du corps de valve (2).

25. Procédé selon la revendication 23 ou 24, comprenant en outre l'étape supplémentaire consistant à souder les deux bords longitudinaux de renforcement (11) sans orifices sur le corps de valve (2) après avoir fixé le filtre (6) autour du corps de valve (2) lui-même.
